# EUROPÄISCHE PATENTSCHRIFT

(11) **EP 1 625 051 B1**
(45) Veröffentlichungstag und Bekanntmachung des Hinweises auf die Patenterteilung: **27.07.2011**
(21) Anmeldenummer: 04711558.9
(22) Anmeldetag: 17.02.2004
(51) Int. Cl.: B60R 21/01

(54) **VERFAHREN ZUR BERWACHUNG DER FUNKTIONSFÄHIGKEIT EINES STEUERGERÄTES UND DIAGNOSEVORRICHTUNG**
METHOD FOR MONITORING THE OPERABILITY OF A CONTROL DEVICE AND DIAGNOSIS DEVICE
PROCEDE POUR SURVEILLER LE BON FONCTIONNEMENT D'UN APPAREIL DE COMMANDE ET DISPOSITIF DE DIAGNOSTIC

(30) Priorität: 15.04.2003 DE 10317212
(43) Veröffentlichungstag der Anmeldung: 15.02.2006
(73) Patentinhaber: ROBERT BOSCH GMBH, 70442 Stuttgart (DE)
(72) Erfinder: MEISSNER, Peter, 71394 Kernen (DE)
(86) Internationale Anmeldenummer: PCT/DE2004/000285
(87) Internationale Veröffentlichungsnummer: WO 2004/091979

(56) Entgegenhaltungen:
- EP-A- 0 936 111
- US-A- 3 714 627
- US-A- 5 387 819

## Beschreibung

### STAND DER TECHNK

Die Erfindung betrifft ein Verfahren zur Überwachung der Funktionsfähigkeit eines Steuergerätes und/oder zumindest eines Sensors einer Sicherheitseinrichtung zum Schutz von Fahrzeuginsassen sowie eine Diagnosevorrichtung.

Sicherheitseinrichtungen zum Schutz von Fahrzeuginsassen, wie z.B. Front- und Seitenairbags, Überrollbügel, Gurtstraffer, etc. gehören bei heute hergestellten Kraftfahrzeugen zur Standardausstattung. Solche Sicherheitseinrichtungen bestehen typischerweise aus einer Vielzahl von Sensoren zum Detektieren eines Crashs durch Aufnehmen einer durch den Crash verursachten negativen Beschleunigung oder Geschwindigkeit und einem Steuergerät für die Sicherheitseinrichtung, die einen vom Crash abgeleiteten Wert auswertet. Wird ein gewisser Schwellenwert, der auf das Vorhandensein eines Crashs schließen lässt, detektiert, dann werden die entsprechenden Rückhaltemittel von dem Steuergerät zum Auslösen gebracht.

Wie bei vielen elektronischen Geräten besteht auch bei Steuergeräten und/oder bei Sensoren die Gefahr, dass diese nicht bzw. nicht ordnungsgemäß funktionieren. Dies gilt es jedoch bei Sicherheitseinrichtungen unter allen Umständen zu vermeiden. Aus diesem Grunde weisen heutige Sicherheitseinrichtungen zum Schutz von Fahrzeuginsassen Einrichtungen zur Funktionskontrolle der Sensoren und/oder des Steuergerätes auf, mit denen ein Funktionsausfall möglichst frühzeitig erkannt werden kann.

Damit eine Sicherheitseinrichtung in einem Kraftfahrzeug mit hoher Zuverlässigkeit arbeitet, ist es von entscheidender Bedeutung, dass die Crashsensoren (z.B. Beschleunigungssensoren, Deformationssensoren) sowie das entsprechende Steuergerät ständig fehlerfrei funktionieren. Falls die Funktionsfähigkeit eines Crashsensors bzw. eines Steuergerätes gestört ist, muss dies sofort signalisiert werden, damit die erforderlichen Reparatur- oder Austausclunaßnahmen vorgenommen werden können.

Für sicherheitsrelevante elektronische Einrichtungen, denen im Gefahrenfall das Leben von Fahrzeuginsassen anvertraut ist, wird eine außerordentliche Betriebssicherheit gefordert. Diese hohe Betriebssicherheit kann praktisch nur dann garantiert werden, wenn alle Komponenten der Sicherheitseinrichtung auf deren Funktionsweise überprüfbar sind.

Bei dem Verfahren zur Überprüfung eines Beschleunigungssensors der Sicherheitseinrichtung wird jeweils der auf seine Funktionsfähigkeit zu überprüfende Beschleunigungssensor mit einem Testsignal beaufschlagt. Das vom Beschleunigungssensor auf das Testsignal hin ausgegebene Antwortsignal wird dann als Maß zur Überprüfung der Funktionalität des Beschleunigungssensors herangezogen. Diese Funktionstests des Beschleunigungssensors werden fortwährend während des Normalbetriebs der Sicherheitseinrichtung, beispielsweise beim Starten des Kraftfahrzeuges, vorgenommen.

Zum allgemeinen Hintergrund der Funktionsprüfung von Beschleunigungssensoren wird auf die Offenlegungsschriften DE 44 39 886 A1, DE 37 06 765 A1, DE 37 36 294 A1, DE 43 02 399 A1, DE 197 57 118 A1 sowie auf die deutsche Patentschrift DE 32 49 367 C1 verwiesen.

Bei Steuergeräten für Sicherheitseinrichtungen zum Schutz von Fahrzeuginsassen sowie deren ausgelagerten Sensoren besteht immer auch die Gefahr, dass diese durch einen Unfall beschädigt werden. Die Art der Beschädigung hängt meist von der Stärke des Aufpralls ab. Ist der Aufprall und damit die Deformation so groß, dass die Stelle, an der das Steuergerät bzw. die entsprechenden Sensoren befestigt sind, deformiert werden, können auch das Steuergerät bzw. die Sensoren durch den Aufprall beschädigt worden sein. Diese Beschädigung kann so groß sein, dass das Steuergerät bzw. die Sensoren nicht mehr funktionsfähig sind. In diesem Falle müssten diese Geräte ausgetauscht werden. Trotz eines Aufpralls und einer sich daraus ergebenden Deformation können jedoch das Steuergerät und einzelne Sensoren nach wie vor funktionsfähig sein, so dass diese nicht notwendigerweise ausgetauscht werden müssen. Darüber hinaus gibt es auch die Konstellation, dass das Steuergerät bzw. die Sensoren durch den Aufprall zwar leicht beschädigt wurden, zunächst aber noch voll funktionsfähig sind. Es besteht hier aber die Gefahr, dass diese Geräte im Laufe der Zeit, beispielsweise durch mechanische Einflüsse wie Vibrationen, Temperatur oder Eindringen von Feuchtigkeit, oder bei einem weiteren Unfall ihre Funktionalität verlieren. In diesem Falle hätten diese Geräte aber nach dem ursprünglichen Aufprall ausgetauscht werden müssen.

Es ist aber sehr schwierig, die genannten Fälle voneinander unterscheiden zu können. Insbesondere lässt sich bei noch funktionsfähigen Geräten nicht ohne weiteres feststellen, ob und wann diese gegebenenfalls ausfallen werden.

Aus diesem Grunde werden bei Steuergeräten für Sicherheitseinrichtungen, insbesondere bei Airbagsteuergeräten, diese typischerweise nach ein bis fünf Crashs, bei denen das Steuergerät mindestens ein Rückhaltemittel zum Auslösen gebracht hat, ausgetauscht. Im Falle von Crashsensoren existieren oftmals keine Vorschriften, ob und gegebenenfalls unter welchen Umständen diese bei einem Crash ausgetauscht werden sollten.

Ein damit verbundenes Problem ergibt sich auch dadurch, dass insbesondere in Werkstätten mit weniger erfahrenen Mitarbeitern häufig sämtliche Steuergeräte und Crashsensoren infolge eines Crashs ausgetauscht werden, obwohl diese zum Teil noch voll funktionsfähig waren. Alternativ gibt es auch die Möglichkeit, dass beispielsweise ein voll funktionsfähiges Steuergerät ausgetauscht wird, während beispielsweise ein nicht mehr voll funktionsfähiger Beschleunigungssensor nicht ausgetauscht wird.

Aus EP 0 936 111 A1 ist es bekannt, eine Warnlampe zu aktivieren, wenn eine abgespeicherte Zündinformation dies anzeigt. Damit soll ein Schaden durch die großen Zündströme frühzeitig abgefangen werden.

### VORTEILE DER ERFINDUNG

Die Erfindung löst die Probleme des Standes der Technik durch ein Verfahren mit Merkmalen des Patentanspruchs 1 sowie eine Diagnosevorrichtung mit den Merkmalen des Patenanspruchs 6.

Das der vorliegenden Erfindung zugrunde liegende Prinzip besteht darin, dass das Steuergerät bzw. eine vergleichbare Einrichtung selbst entscheidet, ob das Steuergerät infolge eines Aufpralls (Crashs) getauscht werden müsste. Zusätzlich oder alternativ kann das Steuergerät oder ein vergleichbares Gerät auch entscheiden, ob und gegebenenfalls welche Sensoren im Falle eines Crashs getauscht werden müssen. Auf diese Weise können die infolge eines Crashs entstehenden Reparaturkosten minimiert werden, da lediglich nicht voll funktionsfähige Steuergeräte bzw. Sensoren ausgetauscht werden, wohingegen die funktionsfähigen Geräte nach wie vor verwendet werden können. Auf diese Weise wird auch das Risiko, dass ein Steuergerät bzw. ein entsprechender Sensor bei einem Crash versagt, minimiert.

Ein weiterer Vorteil des erfindungsgemäßen Verfahrens besteht darin, dass diese Funktionalität in den entsprechenden Handbüchern und Pflichtenheften des Fahrzeugherstellers, der Werkstatttestgeräte und Fahrzeughandbücher beschrieben sein muss, was zu einer hohen Transparenz führt und eine gute Nachweisbarkeit dieses Verfahrens gewährleistet.

Vorteilhafte Ausgestaltungen und Weiterbildungen der Erfindung sind den Unteransprüchen sowie der Beschreibung unter Bezugnahme auf die Zeichnung entnehmbar.

In einer sehr vorteilhaften Ausgestaltung wird sowohl für jedes Steuergerät als auch für jeden Sensor ein Wert für die Aufprallschwere bezogen auf eben dieses Gerät berechnet. Der jeweils berechnete Wert für die Aufprallschwere des jeweiligen Steuergerätes bzw. des jeweiligen Sensors wird dann mit einem vorgegebenen Schwellenwert verglichen. Dieser Schwellenwert ist typischerweise ebenfalls für das jeweilige Steuergerät bzw. den jeweiligen Sensor spezifisch vorgegeben. Das bedeutet, dass abhängig von der Position des jeweiligen Steuergerätes bzw. Sensors innerhalb des Kraftfahrzeuges sowie abhängig von seinen mechanischen Eigenschaften ein jeweils darauf abgestimmter Schwellenwert vorgegeben sein kann. Darüber hinaus kann der Schwellenwert selbstverständlich auch von anderen Parametern, wie z.B. der mechanischen Stabilität des jeweiligen Gerätes, abhängen.

In einer weiteren vorteilhaften Ausgestaltung können Informationen aus mehreren vorangegangenen Aufprallvorgängen für die Bestimmung des Wertes für die Aufprallschwere des Steuergerätes mitberücksichtigt werden. Insbesondere sieht diese Funktionalität vor, dass beispielsweise bei vorangegangenen Aufprallvorgängen, bei denen das Steuergerät ausgelöst hat, dies bei der Berücksichtigung eines neuerlichen Aufpralls für die Bestimmung der Aufprallschwere mitberücksichtigt wird. Infolge dessen könnte für einen solchen Fall beispielsweise durch Skalierung mit einem Korrekturfaktor ein detektierter neuerlicher Aufprall mit einem vergleichsweise höheren Wert für die Aufprallschwere bedacht werden als ein gleich starker Aufprall, bei dem kein Aufprall vorangegangen ist. Alternativ wäre auch denkbar, dass bei einem wiederholten Aufprall der vorgegebene Schwellenwert herabgesetzt ist. Bei dieser erfindungsgemäßen Ausgestaltung wird also vorteilhafterweise mitberücksichtigt, dass das Steuergerät aufgrund eines früheren Aufpralles mit einer gewissen Wahrscheinlichkeit bereits beschädigt wurde.

In einer weiteren vorteilhaften Ausgestaltung wird der Absolutwert des vorgegebenen Schwellenwertes mit zunehmender Betriebsdauer der Sicherheitseinrichtung abgesenkt. Es wird damit dem Sachverhalt Rechnung getragen, dass mit zunehmender Betriebsdauer infolge äußerer Einwirkung, wie z.B. Vibrationen, Temperatureinflüsse, unsachgemäßer Behandlung, etc., das Steuergerät bzw. die Sensoren auch ohne Aufprall und damit auch ohne Beschädigung nicht mehr so funktionsfähig sind, wie sie beispielsweise im ursprünglichen Zustand waren.

In einer vorteilhaften Ausgestaltung werden zur Bestimmung des vorgegebenen Schwellenwertes Messungen aus Crashversuchen sowie daraus abgeleitete Berechnungen und Erkenntnisse verwendet. Die Fahrzeughersteller können hier abhängig von der jeweiligen Modellvariante definieren, wie hoch die vorgegebene Schwelle in Abhängigkeit von der jeweiligen Geschwindigkeit, dem Fahrzeugaufprall, dem Aufpralltyp, etc. gewählt werden müsste. Beispielsweise müssen vor Inbetriebnahme einer Sicherheitseinrichtung bei einem Kraftfahrzeug eine Vielzahl von Crashversuche zum Testen dieser Sicherheitseinrichtung vorgenommen werden. Durch solche Crashversuche ergeben sich dann Erfahrungswerte oder sonstige Erkenntnisse für die vorgegebene Schwelle, bei denen zwar die entsprechenden Sensoren bzw. Steuergeräte nach dem Crash funktionsfähig bleiben, es sich aber herausstellt, dass die Funktionsfähigkeit im Langzeittest nicht mehr gewährleistet ist.

In einer vorteilhaften Ausgestaltung wird das Auslesen bzw. Auswerten des ausgegebenen Funktionsfehlersignals von einem Werkstatttestgerät durchgeführt. Zusätzlich oder alternativ kann dies auch durch das Steuergerät selbst vorgenommen werden.

Im letzteren Falle benötigt die Diagnosevorrichtung eine Ausgabeeinheit, die im Falle eines Fehlersignals dies dem Fahrzeugnutzer signalisiert. Diese Ausgabeeinheit kann beispielsweise in Form einer aufleuchtenden Lampe realisiert sein. Darüber hinaus könnte sie selbstverständlich auch in der Funktionalität eines im Kraftfahrzeug enthaltenen Bordcomputers vorhanden sein. In einer vorteilhaften Ausgestaltung kann aus dem Fehlersignal abgeleitet werden, welches Steuergerät bzw. welcher Sensor nicht voll funktionsfähig ist.

In einer sehr vorteilhaften Ausgestaltung kann die Funktionalität der Diagnosevorrichtung ganz oder zumindest teilweise in dem Steuergerät selbst implementiert sein. Die Diagnosevorrichtung gibt im Falle, dass der gemessene bzw. der berechnete Wert für die Aufprallschwere den vorgegebenen Schwellenwert übersteigt, ein Funktionsfehlersignal entweder an ein Werkstatttestgerät oder an eine programmgesteuerte Einheit ab. Vorteilhafterweise ist für dieses Steuergerät bzw. für jeden Sensor ein steuergerättypischer bzw. sensortypischer Schwellenwert vorgesehen. Dieser vorgegebene Schwellenwert ist niedriger als ein Schwellenwert, der für ein Auslösen eines Rückhaltemittels vorgesehen ist.

### ZEICHNUNGEN

Die vorliegende Erfindung wird nachfolgend anhand der in den Figuren der Zeichnung angegebenen Ausführungsbeispiele näher erläutert. Es zeigen dabei:
- Figur 1: das Blockschaltbild einer Sicherheitseinrichtung bei einem Kraftfahrzeug mit erfin- dungsgemäßer Diagnosevorrichtung;
- Figur 2: anhand eines Blockschaltbildes den Ablauf eines erfindungsgemäßen Verfahrens;
- Figur 3: das Blockschaltbild einer zweiten Ausgestaltung einer erfindungsgemäßen Diagnose- vorrichtung.

### BESCHREIBUNG DER AUSFÜHRUNGSBEISPIELE

In den Figuren der Zeichnung sind gleiche bzw. funktionsgleiche Elemente- sofern nichts anderes angegeben ist - mit gleichen Bezugszeichen versehen worden.

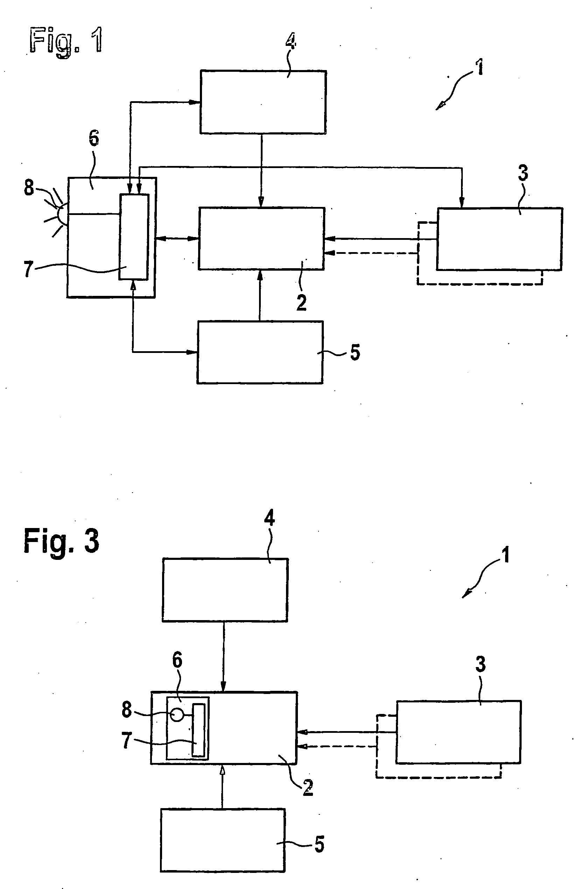

Figur 1 zeigt das Blockschaltbild einer Sicherheitseinrichtung mit erfindungsgemäßer Diagnosevorrichtung.

In Figur 1 ist mit Bezugszeichen 1 die Sicherheitseinrichtung bezeichnet. Die Sicherheitseinrichtung 1 ist hier als elektronisches Rückhaltesystem, beispielsweise ein Airbagsystem, ausgebildet. Die Sicherheitseinrichtung enthält ein Airbagsteuergerät 2 sowie eine Vielzahl von Sensoren 3 - 5 . Im vorliegenden Fall weist die Sicherheitseinrichtung 1 eine oder mehrere Frontsensoren 3 sowie Seitensensoren 4, 5 auf. Darüber hinaus können selbstverständlich auch Hecksensoren vorgesehen sein. Erfindungsgemäß ist nun eine Diagnosevorrichtung 6 vorgesehen. Die Diagnosevorrichtung 6 kommuniziert bidirektional sowohl mit dem Steuergerät 2 als auch mit den Sensoren 3 - 5. Statt einer einzigen Diagnosevorrichtung 6 wäre selbstverständlich auch denkbar, für jedes Steuergerät 2 bzw. jeden Sensor 3 - 5 seine eigene Diagnosevorrichtung 6 vorzusehen. Ebenfalls denkbar wäre, die Funktionalität der Diagnosevorrichtung 6 in das Steuergerät 2 zu implementieren.

Die erfindungsgemäße Diagnosevorrichtung 6 enthält eine Vergleichseinrichtung 7 sowie eine Ausgabeeinheit 8.

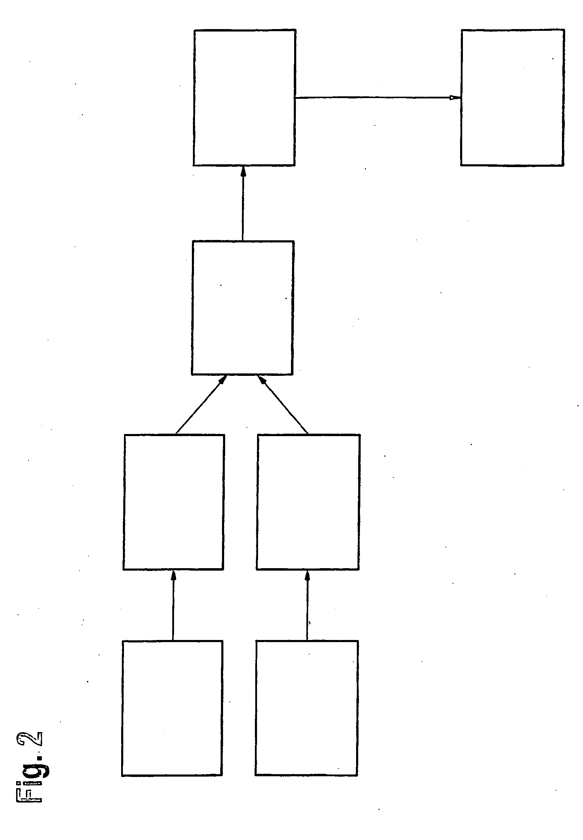

Nachfolgend wird das erfindungsgemäße Verfahren anhand des Blockschaltbildes in Figur 2 näher beschrieben:
Ein Fahrzeugaufprall gibt typischerweise eine Beschleunigung (oder Geschwindigkeit oder Druck) in x- und y-Richtung an. Diese Beschleunigungen werden im Falle eines Fahrzeugaufpralls von zumindest einem der Sensoren 3 - 5 detektiert. Die Beschleunigungen in x-Richtung und y-Richtung werden jeweils zu einer Geschwindigkeit (abgebaute Fahrzeuggeschwindigkeit DV) integriert und daraus wird eine Mittelwertbildung vorgenommen. Diese so genannte abgebaute Geschwindigkeit DV bzw. deren Mittelwert, wird meist als Maß für die Aufprallschwere verwendet.
Das Steuergerät 2 bekommt also von den eingebauten und ausgelagerten Sensoren 3 - 5 Informationen über deren mechanische Belastung (Druck oder Beschleunigung) infolge eines Fahrzeugaufpralls. Das Steuergerät 2 ermittelt während des Fahrzeugaufpralles die jeweiligen Integrale- und Spitzenwerte der gemessenen Sensorsignale. Die so gewonnen Daten werden mit einstellbaren Schwellen verglichen, was letztendlich zu einem Auslösen eines Rückhaltemittels führt.

Darüber hinaus wird erfindungsgemäß die abgebaute Fahrzeuggeschwindigkeit, die aus dem Maximum der berechneten x-, y-Integrale der gemessenen Beschleunigung berechnet wird, als Maß für die Unfallschwere herangezogen. Diese Werte für die Unfallschwere werden zum Beispiel in einem Betragsmaximumspeicher abgelegt. Der Inhalt des Betragsmaximumspeichers kann nach einem Fahrzeugaufprall mit einer vom Fahrzeughersteller vorgegebenen Schwelle, die zum Beispiel in ohnehin stattfindenden Crashversuchen ermittelt wurde, verglichen werden. Dies geschieht in der Vergleichseinrichtung 7. Wird die vorgegebene Schwelle überschritten, dann erzeugt das Steuergerät 2 bzw. die Diagnosevorrichtung 6 ein Fehlersignal, welches dem Fahrzeugnutzer in Form beispielsweise einer Warmlampe δ angezeigt wird. Zusätzlich oder alternativ kann dieses Funktionsfehlersignal auch in einer Werkstatt von einem Werkstatttestgerät ausgelesen werden, Wird also ein Funktionsfehlersignal ausgegeben, dann bedeutet dies, dass das Airbagsteuergerät 2 und/oder die entsprechenden Sensoren 3-5 ausgetauscht werden müssen. Bleibt das Betragsmaximum unter der vorgegebenen Schwelle und das Steuergerät 2 bzw. die Sensoren 3-5 weisen bei einem internen Selbsttest keine Fehler auf, dann kann das entsprechende Gerät im Fahrzeug bleiben, da es als voll funktionsfähig erachtet wird.

Damit können die Fahrzeughersteller eine Schwelle (z.B. DV=30 km/h) definieren, bei der das Steuergerät 2 ausgetauscht werden müsste. Jeder einzelne externe Sensor 3-5 kann zusätzlich oder alternativ mit ähnlichen Berechnungen überprüft werden. Auf diese Weise kann das Airbagsteuergerät 2 für sich selbst und für jeden ausgelagerten Sensor 3-5 entscheiden, ob es bzw. sie nach einem Fahrzeugaufprall ausgewechselt werden müssen.

Obwohl die vorliegende Erfindung vorstehend anhand eines bevorzugten Ausführungsbeispiels beschrieben wurde, ist sie darauf nicht beschränkt, sondern auf vielfältige Art und Weise modifizierbar.

So kann, wie in dem Ausführungsbeispiel in Figur 3 dargestellt ist, die erfindungsgemäße Diagnosevorrichtung 6 auch im Steuergerät 2 implementiert sein. Darüber hinaus muss die Vergleichseinheit 7 und/oder die Ausgabeeinheit 8 nicht notwendigerweise in der Diagnosevorrichtung 6 enthalten sein, sondern kann beispielsweise auch an einer anderen Stelle des Kraftfahrzeuges vorgesehen sein.

Schließlich sei die Erfindung nicht auf die in den Figuren 1 und 3 angegebenen Anzahl von Steuergeräten 2 bzw. Sensoren 3 - 5 beschränkt, sondern lässt sich auf eine beliebige Anzahl dieser Geräte 2 - 5 erweitern.

## Patentansprüche

1. Verfahren zur Überwachung der Funktionsfähigkeit eines Steuergerätes (2) und/oder zumindest eines Sensors (3-5) einer Sicherheitseinrichtung (1) zum Schutz von Fahrzeuginsassen, mit den Schritten:
a) Eine insbesondere von einem Aufprall verursachte negative Beschleunigung und/oder Geschwindigkeit und/oder Druck wird aufgenommen;
b) Aus der aufgenommenen Beschleunigung bzw. der Geschwindigkeit bzw. dem Druck wird ein Wert für die Aufprallschwere abgeleitet;
c) Der Wert für die Aufprallschwere wird mit einem vorgegebenen Schwellenwert:verglichen; **dadurch gekennzeichnet, dass** wenn der Wert für die Aufprallschwere den vorgegebenen Schwellenwert übersteigt, dann wird eine Funktionsfehlersignal ausgegeben, welches anzeigt, dass für das Steuergerät (2) und/oder für zumindest einen Sensor (3-5) eine ordnungsgemäße Funktion nicht mehr gewährleistet ist, dass jeweils ein Wert für die Aufprallschwere für jedes Steuergerät (2) und/oder für jeden Sensor (3-5) berechnet wird und mit jeweils einem vorgegebenen Schwellenwert für eben das entsprechende Steuergerät (2) bzw. den entsprechenden Sensor (3-5) verglichen wird.

2. Verfahren nach Anspruch 1,
**dadurch gekennzeichnet,**
**dass** die Informationen von mehreren Aufprall-Vorgängen bei der Bestimmung des Wertes für die Aufprallschwere des Steuergerätes (2) und oder dessen vorgegebenen Schwellenwertes berücksichtigt werden.

3. Verfahren nach einem der vorstehenden Ansprüche,
**dadurch gekennzeichnet,**
**dass** der vorgegebene Schwellenwert mit zunehmender Betriebsdauer der Sicherheitseinrichtung (1) abgesenkt wird.

4. Verfahren nach einem der vorstehenden Ansprüche,
**dadurch gekennzeichnet,**
**dass** zur Bestimmung des vorgegebenen Schwellenwertes Messungen aus Crashversuchen und/oder daraus abgeleitete Berechnungen und Erkenntnisse verwendet werden.

5. Verfahren nach einem der vorstehenden Ansprüche,
**dadurch gekennzeichnet,**
**dass** das Auslesen und Auswerten des ausgegebenen Funktionsfehlersignals von einem Werkstatttestgerät und/oder dem Steuergerät (2) selbst durchgeführt wird.

6. Diagnosevorrichtung zur Überwachung der Funktionsfähigkeit eines Steuergerätes (2) und/oder zumindest eines Sensors (3-5) einer Sicherheitseinrichtung (1) zum Schutz von Fahrzeuginsassen, insbesondere unter Verwendung eines Verfahrens nach einem der vorstehenden Ansprüche,
die mit zumindest einem Sensor (3-5) der Sicherheitseinrichtung (1) zur Aufnahme eines Aufpralls gekoppelt ist und die zusammen mit dem Steuergerät (2) und zumindest einem Sensor (3-5) in einem Kraftfahrzeug angeordnet ist, **dadurch gekennzeichnet, dass**
mit einer Vergleichseinrichtung (7), die zumindest einen vorgegebenen Schwellwert für eine ordnungsgemäße Funktion für das Steuergerät (2) und/oder zumindest einen Sensor (3-5) aufweist und die einen von einem Aufprall abgeleiteten Wert für die Aufprallschwere mit dem vorgegebenen Schwellenwert vergleicht,
mit einer Ausgabeeinheit (8), die für den Fall, dass der Wert für die Aufprallschwere den Schwellenwert übersteigt, ein Funktionsfehlersignal ausgibt, welches anzeigt, dass für das Steuergerät (2) und/oder zumindest einen Sensor (3-5) eine zukünftige ordnungsgemäße Funktion nicht gewährleistet ist, dass für jedes Steuergerät (2) und/oder für jeden Sensor (3-5) ein Steuergerät typischer bzw. Sensor typischer Schwellenwert vorgegeben ist.

7. Diagnosevorrichtung nach Anspruch 6,
**dadurch gekennzeichnet,**
**dass** die Funktionalität der Diagnosevorrichtung (6) ganz oder teilweise im Steuergerät (2) implementiert ist.

8. Diagnosevorrichtung nach einem der Ansprüche 6 oder 7,
**dadurch gekennzeichnet,**
**dass** der bzw. die vorgegebene(n) Schwellwert(e) niedriger ist (sind) als der Schwellwert, der für ein Auslösen eines dem Steuergerät (2) bzw. den Sensoren (3-5) zugeordneten Rückhaltemittels vorgesehen ist.

## Claims

1. Method for monitoring the operational capability of a control device (2) and/or of at least one sensor (3-5) of a safety device (1) for protecting vehicle occupants, having the steps:
a) a negative acceleration and/or speed and/or pressure caused, in particular, by an impact is recorded;
b) a value for the severity of the impact is derived from the recorded acceleration or the speed or the pressure;
c) the value for the severity of the impact is compared with a predefined threshold value, **characterized in that** if the value for the severity of the impact exceeds the predefined threshold value, a functional fault signal is output which indicates that a satisfactory function is no longer ensured for the control device (2) and/or for at least one sensor (3-5), **in that** in each case a value for the severity of the impact is calculated for each control device (2) and/or each sensor (3-5) and is compared with, in each case, a predefined threshold value for the exactly corresponding control device (2) or the corresponding sensor (3-5).

2. Method according to Claim 1, **characterized in that** the information from a plurality of impact processes is taken into account in the determination of the value for the severity of the impact of the control device (2) and/or its predefined threshold value.

3. Method according to one of the preceding claims, **characterized in that** the predefined threshold value is reduced as the operating duration of the safety device (1) increases.

4. Method according to one of the preceding claims, **characterized in that** measurements from crash trials and/or calculations and realizations derived therefrom are used for the determination of the predefined threshold value.

5. Method according to one of the preceding claims, **characterized in that** the reading out and evaluation of the functional fault signal which is output is carried out by a workshop test device and/or the control device (2) itself.

6. Diagnostic device for monitoring the operational capability of a control device (2) and/or of at least one sensor (3-5) of a safety device (1) for protecting vehicle occupants, in particular using a method according to one of the preceding claims,
which is coupled to at least one sensor (3-5) of the safety device (1) for recording an impact, and which is arranged, together with the control device (2) and at least one sensor (3-5), in a motor vehicle, **characterized in that**
having a comparison device (7) which has at least one predefined threshold value for a satisfactory functioning for the control device (2) and/or at least one sensor (3-5), and which compares a value for the severity of the impact, derived from an impact, with the predefined threshold value,
having an output unit (8) which, in the event of the value for the severity of the impact exceeding the threshold value, outputs a functional fault signal which indicates that a future satisfactory function is not ensured for the control device (2) and/or at least one sensor (3-5), **in that** a threshold value which is typical of a control device and/or a threshold value which is typical of a sensor is predefined for each control device (2) and/or for each sensor (3-5).

7. Diagnostic device according to Claim 6, **characterized in that** the functionality of the diagnostic device (6) is implemented entirely or partially in the control device (2).

8. Diagnostic device according to one of Claims 6 or 7, **characterized in that** the predefined threshold value or values is/are lower than the threshold value which is predefined for triggering of a restraint means which is assigned to the control device (2) or the sensors (3-5).

## Revendications

1. Procédé de surveillance du bon fonctionnement d'un appareil de commande (2) et/ou d'au moins un détecteur (3-5) d'un système de sécurité (1) destiné à protéger les occupants d'un véhicule, lequel procédé présente les étapes qui consistent à :
a) enregistrer une accélération négative provoquée par une collision, et/ou une vitesse et/ou une pression,
b) à partir de l'accélération, de la vitesse ou de la pression enregistrées, déduire une valeur de la gravité de la collision et
c) comparer la valeur de la gravité de la collision à une valeur de seuil prédéterminée, **caractérisé en ce que**
lorsque la valeur de la gravité de la collision dépasse la valeur de seuil prédéterminée, un signal d'erreur de fonctionnement qui indique que le fonctionnement correct de l'appareil de commande (2) et/ou d'au moins un détecteur (3-5) n'est plus garanti est émis et
**en ce qu'**une valeur de la gravité d'une collision est calculée pour chaque appareil de commande (2) et/ou pour chaque détecteur (3-5) et est comparée à une valeur de seuil prédéterminée pour le même appareil de commande (2) ou le même détecteur (3-5).

2. Procédé selon la revendication 1, **caractérisé en ce que** les informations de plusieurs événements de collision sont pris en compte lors de la détermination de la valeur de la gravité d'une collision de l'appareil de commande (2) ou de sa valeur de seuil prédéterminée.

3. Procédé selon l'une des revendications précédentes, **caractérisé en ce que** la valeur de seuil prédéterminée est abaissée en fonction de l'augmentation de la durée d'utilisation du dispositif de sécurité (1).

4. Procédé selon l'une des revendications précédentes, **caractérisé en ce que** des mesures provenant d'essais de collision et/ou de calculs et de connaissances qui en sont déduits sont utilisées pour la détermination de la valeur de seuil prédéterminée.

5. Procédé selon l'une des revendications précédentes, **caractérisé en ce que** la lecture et l'évaluation du signal d'erreur de fonctionnement émis est réalisée dans un appareil de test en atelier et/ou dans l'appareil de commande (2) proprement dit..

6. Dispositif de diagnostic destiné à surveiller le bon fonctionnement d'un appareil de commande (2) et/ou d'au moins un détecteur (3-5) d'un système de sécurité (1) destiné à protéger les occupants d'un véhicule, en particulier par recours à un procédé selon l'une des revendications précédentes,
accouplé à au moins un détecteur (3-5) du système de sécurité (1) pour l'enregistrement d'une collision et disposé dans un véhicule automobile en même temps que l'appareil de commande (2) et qu'au moins un détecteur (3-5),
**caractérisé en ce que**
il présente un système comparateur (7) qui présente au moins une valeur de seuil d'un fonctionnement correct de l'appareil de commande (2) et/ou d'au moins un détecteur (3-5) et qui compare une valeur de gravité d'une collision déduite d'une collision à la valeur de seuil prédéterminée,
une unité d'émission (8) qui, au cas où la valeur de la gravité de la collision dépasse la valeur de seuil, délivre un signal d'erreur de fonctionnement qui indique que le fonctionnement correct futur de l'appareil de commande (2) et/ou d'au moins un détecteur (3-5) n'est plus garanti et
**en ce qu'**une valeur de seuil typique de l'appareil de commande ou typique du détecteur est prédéterminée pour chaque appareil de commande (2) et/ou pour chaque détecteur (3-5).

7. Dispositif de diagnostic selon la revendication 6, **caractérisé en ce que** la fonction du dispositif de diagnostic (6) est réalisée totalement ou en partie dans l'appareil de commande (2).

8. Dispositif de diagnostic selon l'une des revendications 6 ou 7, **caractérisé en ce que** la ou les valeurs de seuil prédéterminées sont plus basses que la valeur de seuil prévue pour le déclenchement d'un moyen de retenue associé à l'appareil de commande (2) ou aux détecteurs (3-5).
